(19) Europäisches Patentamt
European Patent Office
Office européen des brevets

(11) **EP 1 262 033 B1**

(12) **EUROPÄISCHE PATENTSCHRIFT**

(45) Veröffentlichungstag und Bekanntmachung des Hinweises auf die Patenterteilung:
**08.02.2006 Patentblatt 2006/06**

(21) Anmeldenummer: **01929227.5**

(22) Anmeldetag: **05.03.2001**

(51) Int Cl.:
**H04B 10/18** (2006.01)      **G01M 11/00** (2006.01)

(86) Internationale Anmeldenummer:
**PCT/DE2001/000814**

(87) Internationale Veröffentlichungsnummer:
**WO 2001/067649 (13.09.2001 Gazette 2001/37)**

(54) **VORRICHTUNG ZUR ERFASSUNG DER PMD VON OPTOELEKTRONISCHEN ÜBERTRAGUNGSSTRECKEN**

DEVICE FOR DETECTING THE PMD OF OPTOELECTRONIC TRANSMISSION LINES

DISPOSITIF POUR LA DETECTION DE LA DISPERSION DE POLARISATION DE MODE DE LIAISONS DE TRANSMISSION OPTOELECTRONIQUES

(84) Benannte Vertragsstaaten:
**DE FR GB IT**

(30) Priorität: **04.03.2000 DE 10010677**

(43) Veröffentlichungstag der Anmeldung:
**04.12.2002 Patentblatt 2002/49**

(73) Patentinhaber: **THORLABS GmbH**
**85757 Karlsfeld (DE)**

(72) Erfinder:
• **Bandemer, Adalbert**
**85221 Dachau (DE)**
• **Krause, Egbert**
**09217 Burgstädt (DE)**

(74) Vertreter: **Schurack, Eduard F. et al**
**Hofstetter, Schurack & Skora**
**Balanstrasse 57**
**81541 München (DE)**

(56) Entgegenhaltungen:
**EP-A- 0 260 745          EP-A- 0 964 237**
**WO-A-00/77956          US-A- 5 896 211**

• **OKOSHI T ET AL: "NEW POLARISATION-CONTROL SCHEME FOR OPTICAL HETERODYNE RECEIVER USING TWO FARADAY ROTATORS" ELECTRONICS LETTERS,GB,IEE STEVENAGE, Bd. 21, Nr. 18, 29. August 1985 (1985-08-29), Seiten 787-788, XP000560613 ISSN: 0013-5194**

EP 1 262 033 B1

**Beschreibung**

**Technisches Gebiet**

Die Erfindung bezieht sich auf eine Vorrichtung zur Erfassung der Polarisations-Moden-Dispersion (i. f. PMD) von optoelektronischen Übertragungsstrecken.

**Stand der Technik**

Ein bekanntes Verfahren zur Ermittlung der durch Polarisations-Moden-Dispersion (PMD) in optischen Nachrichtenübertragungsstrecken, wie z. B. Faserstrecken hervorgerufenen Verzerrungen bzw. deren Auswirkungen auf die Übertragungsqualität derartiger Strecken ist die Messung der Bitfehlerrate. Diese Methode liefert zwar eine Aussage über die Auswirkung der PMD, jedoch keine Aussagen über die Größe der PMD selbst.

Ein anderes bekanntes Verfahren zur Ermittlung der PMD benutzt nach der optoelektronischen Detektion des Nutzsignals einen Satz von Hochfrequenzfiltern, um die Phasenverschiebungen ausgewählterer Seitenfrequenzen zu bestimmen. Dabei hängt der Aufwand von der Modulationsbandbreite des Nutzsignales ab. Unterschiedliche Bitraten in der digitalen Übertragung erfordern unterschiedliche Filterkombinationen. Es sind üblicherweise nur ca. 3-4 Filter praktikabel. Die Ermittlung der PMD ist an eine Signaldemodulation gebunden und für nur jeweils ein Nutzsignal möglich.

Andererseits besteht ein erhebliches kommerzielles Interesse an der Ermittlung der PMD, um diese beispielsweise mittels geeigneter Kompensationseinrichtungen kompensieren zu können.

Die EP 0 260 745 A1 offenbart eine Vorrichtung für die optische Heterodynerfassung eines optischen Signalstrahls. Sie umfasst einen Laser als lokalen Oszillator, dem ein Polarisationssteller nachgeordnet ist. Der Laserstrahl, der den Polarisationssteller durchlaufen hat, wird in einem Koppler mit dem Signalstrahl überlagert. Die Vorrichtung ist nicht zur Erfassung der Polarisations-Moden-Dispersion von optoelektronischen Übertragungsstrecken eingerichtet.

**Darstellung der Erfindung**

Der Erfindung liegt die Aufgabe zu Grunde, eine Anordnung zur Ermittlung der PMD anzugeben, die in kurzer Messzeit einen Rückschluss auf die Veränderungen der PMD erlaubt, so dass sie beispielsweise und insbesondere als Bestandteil einer PMD-Kompensationseinrichtung verwendbar ist.

Eine erfindungsgemäße Lösung dieser Aufgabe ist im Patentanspruch 1 angegeben. Weiterbildungen der Erfindung sind Gegenstand der abhängigen Ansprüche.

Die Erfindung betrifft ein Verfahren und eine Anordnung zur Messung der Polarisations-Moden-Dispersion in optischen Nachrichtenübertragungsstrecken.

Das Spektrum eines digitalen optischen Datensignals hat eine definierte spektrale Breite, die von der Bitrate abhängt. Je höher die Bitrate ist, desto breiter ist das zugehörige Spektrum.

Die unterschiedlichen Ausbreitungsgeschwindigkeiten der verschiedenen spektralen Anteile mit unterschiedlichen Polarisationszuständen innerhalb der Lichtleitfaser der

Übertragungsstrecke verursachen nach hinreichender Übertragungslänge Signalverzerrungen, die eine Wiederherstellung der digitalen Information unmöglich machen oder zumindest die Signalqualität nachteilig beeinflussen.

Mit Hilfe eines optoelektronischen Heterodynempfängers, dessen Bandbreite ein Bruchteil des Signalspektrums beträgt, wird dieses Spektrum spektral aufgelöst gemessen. Man erhält dann Messwerte, die das Leistungsdichtespektrum des Empfangssignals widerspiegeln.

Bei dieser optischen Überlagerung hängt die Nutzamplitude des elektrischen Überlagerungssignals von den beiden Signalleistungen, aber auch direkt von den Polarisationsrichtungen des einlaufenden Signals und des lokalen Überlagerungslasers ab.

Um die polarisationsunabhängige Leistungsdichte des Eingangsspektrums zu bestimmen, werden zwei orthogonale Polarisationszustände (SOP= state of polarization) z.B. des lokalen Lasers für eine optoelektronische Überlagerung benutzt. Diese können z.B. die horizontale und die vertikale Polarisation mit den Vektoren

$$(S_1, S_2, S_3) = (1,0,0); \; (-1,0,0)$$

sein.

$$SOP_H = ( 1,0,0) \qquad horizontal$$

$$SOP_V = (-1,0,0) \qquad vertikal$$

Die spektrale Verteilung der Gesamtsignalleistung wird unter Benutzung dieser zwei orthogonalen Polarisationszustände ermittelt.

$$P_{Uges}(\lambda) = (P_{UH}(\lambda) + P_{UV}(\lambda)) / 2$$

Um die unterschiedlichen Polarisationszustände innerhalb des Empfangsspektrums spektral aufgelöst messen zu können, werden weitere Polarisationsrichtungen benötigt. Dabei ist es vorteilhaft eine unter 45 Grad stehende und eine rechts- oder links-zirkulare Polarisation zu benutzen, z.B.

$$SOP_{+45} = ( 0, 1, 0) \quad linear, +45° \ schräg$$

$$SOP_R := ( 0, 0, 1) \quad rechts\text{-}zirkular.$$

Das Eingangsspektrum wird nun mit den vorgeschlagenen Polarisationszuständen lokalen Lasers überlagert:

```
                  (S1, S2, S3)
SOP_H    =    ( 1,  0,  0)    horizontal
SOP_v    =    (-1,  0,  0)    vertikal
SOP_+45  =    ( 0,  1,  0)    linear, +45° schräg
SOP_R    =    ( 0,  0,  1 )   rechts-zirkular
```

Die Leistung jedes Mischproduktes ist proportional zu dem Produkt aus Eingangsleistung und Lokallaserleistung und einem Faktor k, der die Übereinstimmung beider Polarisationen beschreibt.

$$P_u = k * P_E * P_L * a(\Delta SOP)$$

K           Konstante
$P_E$        Eingangsleistung
$P_L$        Lokallaserleistung
$a(\Delta SOP)$   Polarisations-Übereinstimmungsfaktor

Dabei ist der Polarisations-Übereinstimmungsfaktor $a(\Delta SOP)$ vom relativen Abstand der SOP auf der Poincaré-Kugel abhängig:

$$a(\Delta SOP) = \cos^2(\alpha/2)$$

$\alpha$   Winkel zwischen $SOP_E$ und $SOP_L$ auf der Poincare-Kugel.

Der Amplitudenfaktor a(ΔSOP) ist maximal 1 bei identischen Polarisationen ($\alpha$ = 0°) und 0 für orthogonale Polarisationen ($\alpha$ = 180°).

Mit Hilfe der drei Polarisationen

$$(S_1, S_2, S_3) = (1,0,0); (0,1,0); (0,0,1),$$

die die Stokes-Vektoren $S_1$, $S_2$, $S_3$ repräsentieren, werden daraus die wellenlängenabhängigen normierten Stokes-Parameter $S_1(\lambda)$, $S_2(\lambda)$ und $S_3(\lambda)$ des Empfangssignals ermittelt:

$$S_1(\lambda) = P_{UH}(\lambda) / P_{Uges}(\lambda)$$

$$S_2(\lambda) = P_{U+45}(\lambda) / P_{Uges}(\lambda)$$

$$S_3(\lambda) = P_{UV}(\lambda) / P_{Uges}(\lambda)$$

Bei jeder Wellenlänge des Eingangsspektrums ist somit die Polarisationsrichtung des ausgefilterten Spektralanteils bestimmt.

$$SOP_E(\lambda) = [S_1(\lambda), S_2(\lambda), S_3(\lambda)]$$

Die PMD zeigt nun ihre Auswirkungen darin, dass die Strahlung der Datenquelle in zwei Leistungsanteile aufgespalten wird, die den Principal States of Polarization {PSP$_{in}$) am Eingang der Übertragungsstrecke entsprechen. Zwischen beiden, in der Regel verschieden großen Leistungsanteilen tritt eine relative Zeitverzögerung, Differential Group Delay {DGD) genannt, auf. Die beiden Leistungsanteile erreichen den erfindungsgemäß ausgebildeten PMD-Monitor mit Polarisationsrichtungen, die den PSP$_{out}$ entsprechen.

Das Datensignal erleidet durch PMD keine Verzerrungen, wenn die DGD gleich O ist, oder die Polarisation der Eingangsstrahlung identisch zu einem PSP$_{in}$ der Übertragungsstrecke ist. In beiden Fällen bleibt die Ausgangspolarisation an Ende der Übertragungsstrecke konstant, selbst wenn die Wellenlänge geringfügig variiert.

$$SOP_E(\lambda) = konst.$$

Die verschiedenen Spektralanteile des Signals haben die gleiche Polarisation, ihre akkumulierte Polarisationsänderung über das Spektrum ist gleich 0.

Das Eingangssignal wird jedoch um so stärker verzerrt, je größer die DGD ist und je näher das Leistungsaufteilungsverhältnis auf die beiden PSP$_{in}$ an den Wert 1:1 kommt:

$$SOP_E(\lambda) = variabel$$

Die Messdaten SOP$_E(\lambda)$ liegen für den relevanten Wellenlängenbereich durch die vorangegangenen Berechnungen vor. Diese Daten sind ausreichend, um die Bestimmung der PMD nach der Poincaré (Arc-Angle) Methode durchzuführen. Dabei wird in jedem Punkt der Kurve der Differenzenquotient aus SOP$_E(\lambda)$ - SOP$_E(\lambda + \delta\lambda)$ auf der Poincaré-Kugel und dem dazugehörigen Wellenlängenabschnitt $\delta\lambda$ gebildet. Aus rechentechnischen Gründen kann hier der Übergang zu diskreten Schritten vorteilhaft sein.

$$\Delta\tau(\lambda_1) = \Delta\Omega * \lambda_0{}^2/2\pi * c * \Delta\lambda$$

$$\Delta\Omega = \text{arc}(\text{SOP}_E(\lambda_i), \text{SOP}_E(\lambda_{i+1}))$$

$$\lambda_0 = (\lambda_i + \lambda_{i+1}) / 2$$

$$\Delta\lambda = \lambda_{i+1} - \lambda_i$$

$\Delta\tau$     DGD in ps

$\Delta\Omega$     Kreisbogen auf de rPoincaré-Kugel

Die nun vorliegenden Einzelwerte $\Delta\tau(\lambda_1)$ werden sinnvoll zu einem quadratischen Mittelwert zusammengefasst, der ein zuverlässiges Maß für die PMD-Verzerrung darstellt:

$$\langle \Delta\tau \rangle = \sqrt{\frac{1}{n}\int_{i=1}^{n}\Delta\tau^2(\lambda_i)}$$

Gegenüber den bekannten Lösungen der konventionellen PMD-Messgeräte, die entweder nach der interferometrischen Methode oder nach dem Jones-Matrix Verfahren arbeiten und pro Messung zwischen einigen zehn Sekunden oder bzw. einigen Minuten benötigen, sehr voluminös sind und mit während der Messung zu bewegende Bauteilen arbeiten, hat die erfindungsgemäße Lösung den Vorteil, in Quasi-Echtzeit die Veränderungen der PMD z.B. von Faserstrecken, zu detektieren. Die erfindungsgemäße Anordnung ermöglichen ferner die Berechnung der wellenlängenabhängigen Stokes-Parameter. Durch die Verwendung des schnell und wahlfrei abstimmbaren lokalen Lasers und der Verwendung schnell reagierender Polarisations-Stellelemente ist der Aufbau eines PMD-Monitors möglich, der in wahlfrei selektierbaren Teilbereichen innerhalb des gesamten Wellenlängenbereichs mit unterschiedlichen Auflösungen arbeitet. Darüber hinaus handelt es sich um eine Lösung geringer Baugröße sowie um eine Lösung ohne bewegte Bauelemente, so dass Echtzeit-PMD-Überwachungssysteme mit besonders langer Lebensdauer realisiert werden können.

**Kurze Beschreibung der Zeichnung**

Die Erfindung wird nachstehend anhand von Ausführungsbeispielen unter Bezugnahme auf die Zeichnung näher beschrieben, in der zeigen:

Fig. 1      ein prinzipielles Ausführungsbeispiel einer erfindungsgemäßen Vorrichtungen zur Messung der PMD,
Fig. 2      eine Abwandlung des in Fig. 1 gezeigten Ausführungsbeispiels mit einem Balance-Mischer,
Fig. 3      eine Abwandlung des in Fig. 2 gezeigten Ausführungsbeispiels mit einem Polarisationssteller,
Fig.4      ein Ausführungsbeispiel mit Polarisationsdi- versity-Empfänger und Balance-Mischer,
Fig. 5a      schematisch die Darstellung der spektralen Leistungsverteilung eines Datensignals,
Fig. 5b      die Wellenlängenabhängigkeit der Polarisationszustände für ein Signal ohne PMD-Verzerrungen,
Fig. 5c      die Wellenlängenabhängigkeit der Polarisationszustände bei Vorhandensein von starken PMD-Verzerrungen,
Fig. 6      ein Ausführungsbeispiel des piezoelektrischen Polarionsstellers des PMD-Monitors, und
Fig. 7      ein erfindungsgemäßen PMD-Monitor als zentrales Bauelement eines PMD-Kompensators.

**Darstellung von Ausführungsbeispielen**

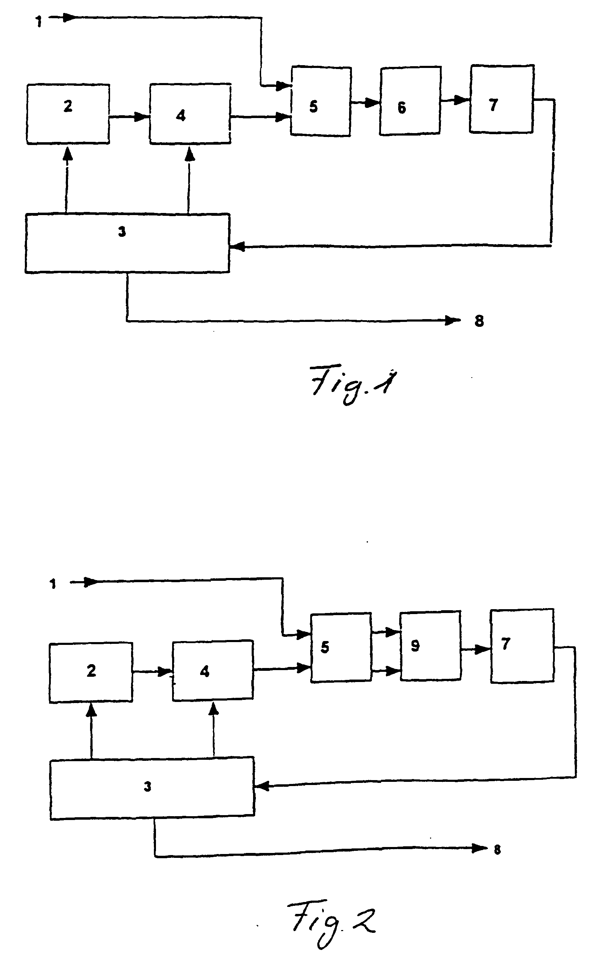

Fig. 1 zeigt schematisch ein erstes Ausführungsbeispiel einer erfindungsgemäßen Vorrichtungen zur Messung der PMD, dem Folgenden auch als PMD-Monitor bezeichnet wird. Ein lokaler, abstimmbarer Laser (2), vorteilhaft ein elektronisch abstimmbarer Distributed-Bragg-Reflector-Laser (DBR-Laser) oder ein elektronisch abstimmbarer Distributed-Feedback-Laser (DFB-Laser), wird von einer Steuer- und Regelungseinheit (3) so abgestimmt, dass der Wellenlängenbereich der Abstimmung das Spektrum eines zu analysierenden Signals (1) einer Übertragungsstrecke überstreicht. Die Polarisation des Lokallasers (2) wird mit Hilfe eines Polarisationsstellers (4) auf die zur Bestimmung der PMD notwendigen vier verschiedenen Polarisationszustände eingestellt. In einem optischen Koppler (5), der zweckmäßigerweise ein 3dB-Koppler ist, wird das zu analysierende Signal (1) mit der Strahlung des lokalen Lasers (2) summiert.

Im folgenden optoelektronische Empfänger (6), vorteilhafterweise eine Photodiode, entsteht ein elektrisches Überlagerungssignal. Eine HF-Filter- und Bewertungseinheit (7) begrenzt die Bandbreite des Überlagerungssignals, filtert unerwünschte Basisbandsignale aus und stellt das Messsignal der nachfolgenden Steuer- und Regel- und Recheneinheit (3) zur Verfügung. Diese analysiert den Verlauf der Messgröße bei den verschiedenen Polarisationen und Wellenlängen des Lokallasers (2). Als Ergebnis dieser Berechnungen wird ein Stellsignal (8) generiert, das proportional zur PMD-Verzerrung des zu analysierenden Eingangssignals (1) ist und das zur Steuerung einer PMD- Kompensatoreinheit geeignet ist. Der Vorteil einer solchen Anordnung mit einem elektronisch durchstimmbaren Halbleiterlaser besteht darin, dass die Abstimmung auf die unterschiedlichen Frequenzen erstens sehr schnell und zweitens mit wählbarer Abstimmsteilheit erfolgen kann und somit Bereiche erhöhter Informationsdichte mit erhöhter Auflösung behandelt werden können. Dies ist im Sinne eines Smart-Monitors wünschenswert.

In der Anordnung nach Fig. 2 ist der optoelektronische Empfänger durch einen optoelektronischen Balanceempfänger (9) ersetzt, in dem die Basisbandanteile der optischen Signale weitgehend unterdrückt werden. Diese Anordnung zeichnet sich durch einen höheren Dynamikbereich aus.

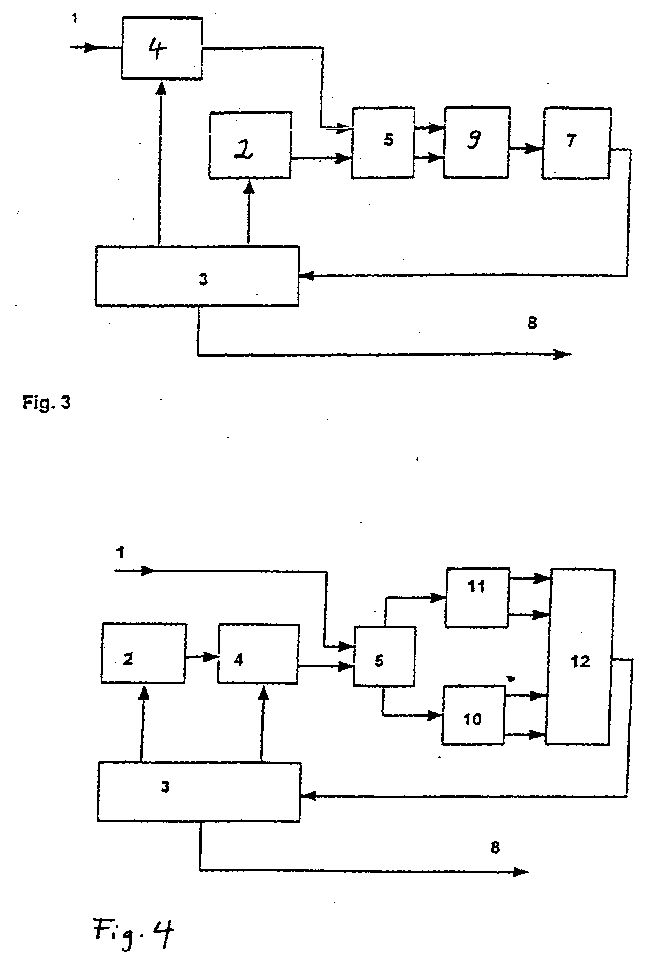

In einer dritten Anordnung nach Fig. 3 kann die Bereitstellung der notwendigen unterschiedlichen Polarisationszustände für die optoelektronische Überlagerung dadurch erreicht werden, dass der Polarisationssteiler (4) nicht im Zweig des lokalen Lasers (2) angeordnet ist, sondern im Zweig des Eingangssignals (1).

In einer Anordnung nach Fig. 4 wird beispielhaft die Umschaltung der Polarisationszustände dadurch umgangen, dass ein Polarisationsdiversity-Empfänger (12) verwendet wird, der Strahlteiler (10, 11) mit Polarisationsfiltereigenschaften enthält.

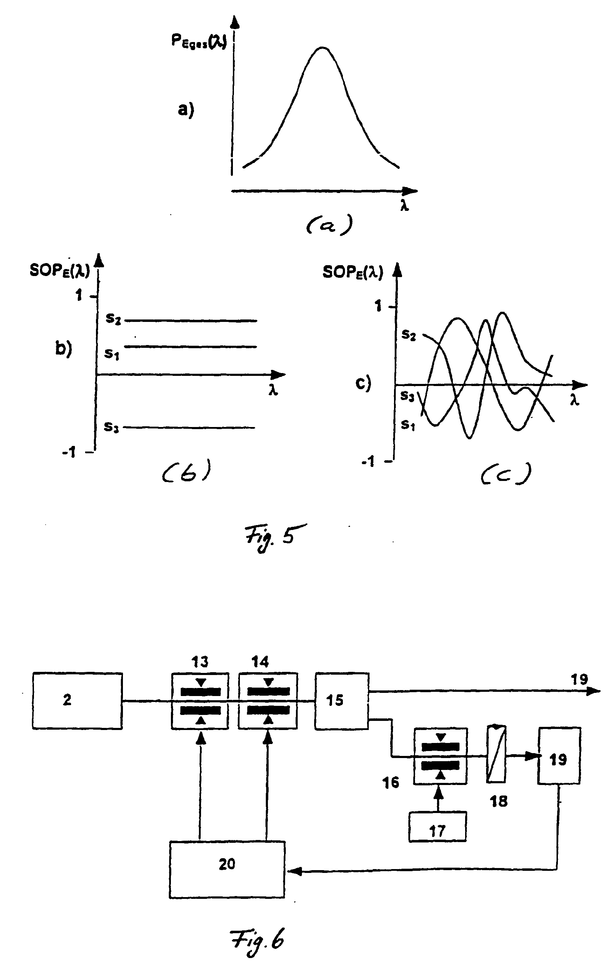

Figur 5a zeigt sinnbildlich die Darstellung das Spektrum $P_{Eges}(\lambda)$ des Eingangssignals.

Fig. 5b zeigt die Poarisationskonstanz über den betreffenden Wellenlängenbereich im Falle fehlender PMD bzw. bei vollständig kompensierter PMD.

In Fig. 5c sind die Verläufe unterschiedlicher Polarisationen der Spektralanteile im Fall von starker PMD dargestellt.

In Fig. 6 ist der schematische Aufbau des Polarisationsstellers (4) innerhalb des PMD- Monitors in einer Ausführung aus Faserquetschern mit Piezo-Elementen dargestellt. Das Licht des lokalen Lasers (2) kann mittels zweier, gegeneinander um 45° gedreht angeordneten Piezo-Faserquetscher (13) und (14) in jede beliebige Ausgangspolarisation gebracht werden. Ein Faserkoppler (15) stellt den Hauptteil der Gesamtleistung am Ausgang (21) zur Verfügung und zweigt einen kleinen Teil für die Polarisationskontrolle ab. Ein weiterer Piezo-Faserquetscher (16) wird von einem Signalgenerator (17) moduliert. Der Polarisator (18) ist gegenüber dem Piezo-Faserquetscher (16) um 45° gedreht angebracht. Das in seiner Polarisationsrichtung modulierte Licht erlangt durch den Polarisator (18) eine Amplitudenmodulation, die von dem optischen Empfänger (19) analysiert wird. Das Messsignal, welches die Modulationsamplitude wiederspiegelt, gelangt auf die Auswerte- und Steuereinheit (20).

Die beiden Piezo-Faserquetscher (13) und (14) werden so angesteuert, dass die Modulationsamplitude am Empfänger (19) zu null wird. Das ist der Fall, wenn die Polarisation am Piezo-Faserquetscher (16) genau horizontal oder vertikal (Eigenmoden des doppelbrechenden Faserelementes) eingestellt ist. Am Ausgang (21) der Anordnung entstehen, bedingt durch die intrinsische Doppelbrechung von Verbindungsfasern und Koppler (15) zwei veränderte Polarisationen, die jedoch in ihrer Orthogonalität zueinander unverändert sind.

Für das Erreichen der horizontalen (1,0,0) bzw. vertikalen (-1,0,0) Polarisation am Piezo- Faserquerscher (16) sind für die Piezo-Faserquetscher (13) und (14) je zwei definierte Steuerspannungen notwendig. Sind diese Spannungen bekannt, können durch mathematische Ableitungen die erforderlichen Steuerspannungen für die Polarisationen 45° schräg (0,1,0) und zirkular rechts (0,0,1) berechnet werden.

Die Auswerte- und Steuereinheit (20) fährt für das Ausführungsbeispiel des Monitors nach Fig. 1 nacheinander die je 4 Steuerspannungen für die Piezo-Faserquetscher (13) und (14) an und erzeugt somit die 4 erforderlichen Polarisationen für die Bestimmung der Stokes- Parameter nach dem beschriebenen Verfahren.

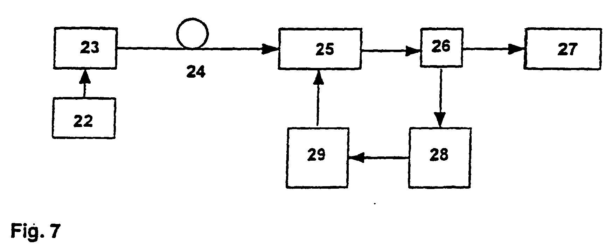

Figur 7 zeigt beispielhaft die Anwendung des PMD-Monitors als zentrales Bauelement eines PMD-Kompensators in einem optischen Übertragungssystem für hohe Datenraten. Das vor einer Datenquelle (22) modulierte Signal des Sendelasers (23) gelangt über eine Übertragungsstrecke (24) in diesem Beispiel zu dem Ort, an dem die Stokes-Parameter ermittelt werden sollen, in diesem Beispiel soll das am Empfangsort sein. Eine dort vor dem Demodulator angeordnete PMD-Kompensationseinheit (25) wird bei Ansteuerung von der Regelungseinheit (29) die PMD der Übertragungsfaser (24) kompensieren. Dazu wird, bevor das Signal den Demodulator (27) erreicht, mittels eines Kopplers (26), ein geringer Teil des Nutzsignals abgezweigt, welcher im PMD-Monitor (28) analysiert wird- Das Ausgangssignal des PMD-Monitors (28) steuert über die Regelungseinheit (29) den PMD-Kompensator.

**Patentansprüche**

1. Vorrichtung, eingerichtet zur Erfassung der Polarisations-Moden-Dispersion (PMD) von optoelektronischen Übertragungsstrecken,
   mit:

   - einem schmalbandigen abstimmbaren Laser (2), dessen Strahlung mit der Strahlung der zu analysierenden Übertragungsstrecke überlagert wird,
   - einem optoelektronischen Heterodynempfänger (6), der das überlagerte Signal empfängt, und mit
   - einem Polarisationssteller (4), der die Polarisationsrichtung des Lasers (2) in Bezug auf die Polarisationsrichtung der zu analysierenden Strahlung (1) einstellt,

   wobei die Vorrichtung ferner

   - eine Steuer- und Auswerteeinheit (3, 7) umfasst, die aus dem Verlauf der von dem Heterodynempfänger (6) empfangenen Intensität der Mischprodukte für unterschiedliche Polarisationen der Strahlung zueinander in Abhängigkeit von der Wellenlänge ein Maß für die Polarisations-Moden-Dispersion (PMD) berechnet.

2. Vorrichtung nach Anspruch 1,
   **dadurch gekennzeichnet, dass** der Laser (2) ein elektronisch durchstimmbarer DBR-Laser oder ein DFB-Laser ist.

3. Vorrichtung nach Anspruch 1 oder 2,
   **dadurch gekennzeichnet, dass** der Polarisationssteller (4) ein piezoelektrischer Steller ist.

4. Vorrichtung nach einem der Ansprüche 1 bis 3,
   **dadurch gekennzeichnet, dass** der Polarisationssteller (4) entweder im Signalzweig oder im Zweig des Lasers angeordnet ist.

5. Vorrichtung nach einem der Ansprüche 1 bis 4,
   **dadurch gekennzeichnet, dass** der Heterodynempfänger (6) ein nichtlinearer optoelektronischer Empfänger und insbesondere eine Fotodiode ist.

6. Vorrichtung nach einem der Ansprüche 1 bis 5,
   **dadurch gekennzeichnet, dass** der Empfänger ein Balance-Empfänger ist.

7. Vorrichtung nach einem der Ansprüche 1 bis 6,
   **dadurch gekennzeichnet, dass** der Empfänger ein Polarisations-Diversity-Empfänger ist.

8. Vorrichtung nach einem der Ansprüche 1 bis 7,
   **dadurch gekennzeichnet, dass** sie in einer Anordnung zur PMD-Kompensation eingesetzt wird.

**Claims**

1. Device adapted for detecting the polarization mode dispersion (PMD) of optoelectronic transmission links, including:

   - a narrow-band tuneable laser (2), the radiation of which is superimposed on the radiation of the transmission link to be analysed,
   - an optoelectronic heterodyne receiver (6) receiving the superimposed signal, and including
   - a polarization adjusting means (4) adjusting the direction of polarization of the laser (2) with respect to the direction of polarization of the radiation (1) to be analysed,

   wherein the device further includes

   - a control and evaluation unit (3, 7) calculating a measure of the polarization mode dispersion (PMD) from the course of the intensity of the mixed products received from the heterodyne receiver (6), for polarizations of the radiation different from each other depending on the wavelength.

**2.** Device according to claim 1,
**characterized in that** the laser (2) is an electronically tuneable DBR laser or a DFB laser.

**3.** Device according to claim 1 or 2,
**characterized in that** the polarization adjusting means (4) is a piezoelectric adjusting means.

**4.** Device according to any one of claims 1 to 3,
**characterized in that** the polarization adjusting means (4) is disposed either in the signal branch or in the branch of the laser.

**5.** Device according to any one of claims 1 to 4,
**characterized in that** the heterodyne receiver (6) is a non-linear optoelectronic receiver and especially a photodiode.

**6.** Device according to any one of claims 1 to 5,
**characterized in that** the receiver is a balance receiver.

**7.** Device according to any one of claims 1 to 6,
**characterized in that** the receiver is a polarization diversity receiver.

**8.** Device according to any one of claims 1 to 7,
**characterized in that** it is used in an assembly for PMD compensation.


**Revendications**

**1.** Dispositif aménagé pour la détection de la dispersion de modes de polarisation (PMD) de liaisons de transmission optoélectroniques, comportant :

- un laser accordable à bande étroite (2) dont le rayonnement est superposé au rayonnement de la liaison de transmission à analyser,
- un récepteur hétérodyne optoélectronique (6) qui reçoit le signal superposé et comportant
- un réglage de polarisation (4) qui règle la direction de polarisation du laser (2) en fonction de la direction de polarisation du rayonnement à analyser (1),

le dispositif comprenant en outre

- une unité de commande et d'exploitation (3, 7) qui calcule une mesure de la dispersion de modes de polarisation (PMD) à partir de l'évolution de l'intensité reçue par le récepteur hétérodyne (6) des produits de combinaisons pour différentes polarisations du rayonnement les unes par rapport aux autres, en fonction de la longueur d'onde.

**2.** Dispositif selon la revendication 1,
**caractérisé en ce que** le laser (2) est un laser DBR ou DFB à accord variable électroniquement.

**3.** Dispositif selon la revendication 1 ou 2,
**caractérisé en ce que** le réglage de polarisation (4) est un réglage piézo-électrique.

**4.** Dispositif selon l'une quelconque des revendications 1 à 3,
**caractérisé en ce que** le réglage de polarisation (4) est disposé soit dans la branche du signal, soit dans la branche du laser.

**5.** Dispositif selon l'une quelconque des revendications 1 à 4,
**caractérisé en ce que** le récepteur hétérodyne (6) est un récepteur optoélectronique non linéaire et, en particulier, une photodiode.

**6.** Dispositif selon l'une quelconque des revendications 1 à 5,
**caractérisé en ce que** le récepteur est un récepteur équilibré (balance receiver).

**7.** Dispositif selon l'une quelconque des revendications 1 à 6,

**caractérisé en ce que** le récepteur est un récepteur à diversité de polarisation (polarisation diversity receiver).

8. Dispositif selon l'une quelconque des revendications 1 à 7,
   **caractérisé en ce qu'**il est mis en oeuvre dans un dispositif de compensation de PMD.

*Fig.1*

*Fig.2*

Fig. 3

Fig. 4

Fig. 5

Fig. 6

**Fig. 7**